Europäisches Patentamt

European Patent Office

Office européen des brevets

(19)

(11) **EP 0 435 399 B1**

(12)

# FASCICULE DE BREVET EUROPEEN

(45) Date de publication et mention
de la délivrance du brevet:
**26.03.1997   Bulletin 1997/13**

(51) Int Cl.⁶: **G06F 7/544**, G06F 7/52

(21) Numéro de dépôt: **90203412.3**

(22) Date de dépôt: **18.12.1990**

(54) **Organe de traitement arithmétique à associer à une unité centrale de microprocesseur**

Arithmetische Verarbeitungseinheit, zu verbinden mit einer Mikroprozessor-Zentraleinheit

Arithmetic processing unit to be associated with a microprocessor central unit

(84) Etats contractants désignés:
**DE FR GB SE**

(30) Priorité: **29.12.1989  FR 8917456**

(43) Date de publication de la demande:
**03.07.1991   Bulletin 1991/27**

(73) Titulaires:
- **PHILIPS COMPOSANTS ET
  SEMICONDUCTEURS
  92150 Suresnes (FR)**
  Etats contractants désignés:
  **FR**
- **Philips Electronics N.V.
  5621 BA Eindhoven (NL)**
  Etats contractants désignés:
  **DE GB SE**

(72) Inventeurs:
- **Quisquater, Jean-Jacques
  F-75008 Paris (FR)**
- **Bournas, Jean-Pierre
  F-75008 Paris (FR)**
- **De Waleffe, Dominique
  F-75008 Paris (FR)**

(74) Mandataire: **Charpail, François et al
Société Civile S.P.I.D.
156, Boulevard Haussmann
75008 Paris (FR)**

(56) Documents cités:
EP-A- 0 286 489          EP-A- 0 329 572
US-A- 4 811 269          US-A- 4 852 037

- ELEKTRONIK. vol. 35, no. 18, septembre 1986,
  MUNCHEN DE pages 112 - 125; R. GLUTH:
  "Integrierte Signalprozessoren"

## Description

La présente invention concerne un organe de traitement arithmétique intégré conjointement à une unité centrale de microprocesseur, à un séquenceur et à une mémoire de travail de type lecture et écriture, pour effectuer une opération selon la formule générale :

$$B = a.X + T$$

dans laquelle $\underline{B}$, $\underline{X}$, et $\underline{T}$ sont des nombres entiers ayant un nombre élevé de bits, et $\underline{a}$ est un opérande à format restreint à $\underline{m}$ bits, petit par rapport audit nombre élevé de bits, opération qui est produite durant une séquence d'étapes de calculs successifs consistant à combiner l'opérande $\underline{a}$ avec des opérandes $x_i$ et $t_i$ chacun à format à $\underline{n}$ bits, petit par rapport audit nombre élevé de bits, qui sont respectivement des portions mutuellement exclusives, de $\underline{n}$ bits contigüs, des entiers $\underline{X}$ et $\underline{T}$, chacune au rang de poids $\underline{i}$ pris en croissant, et à mémoriser un résultat partiel $b_i$, de même rang de poids et formant une portion à $\underline{n}$ bits parmi des portions mutuellement exclusives du résultat complet $\underline{B}$,
ledit organe de traitement comportant des entrées pour les opérandes a, $x_i$ et $t_i$ et une sortie pour le résultat $b_i$, un multiplieur pour effectuer le produit a.$x_i$, suivi d'un arrangement en série d'un premier et d'un deuxième additionneurs, le deuxième additionneur fournissant un résultat partiel d'opération décomposable en une portion de poids forts ainsi qu'une portion de poids faibles à $\underline{n}$ bits pouvant être dirigée en sortie comme résultat $b_i$, sur l'une des entrées de l'un des additionneurs étant appliqué l'opérande $t_i$, et sur l'une des entrées de l'autre additionneur étant appliquée, à l'aide de premiers moyens de mémorisation de recyclage, la portion de poids forts d'une précédente étape de calcul.

L'invention vise plus particulièrement mais non exclusivement des systèmes de petite taille où la fonction d'un traitement d'une information numérique est exécutée par un circuit intégré unique, du genre microcontrôleur. Dans un tel circuit, un compromis très étroit doit être recherché entre la vitesse d'exécution du traitement et la mise en oeuvre d'un minimum de composants, de manière à satisfaire à la fois aux exigences de prix de fabrication, et à celles de la durée d'exécution du traitement. Un exemple particulièrement significatif, à ce propos, est représenté par les dispositifs miniaturisés du type "carte intelligente" (ou "carte à puce") susceptibles d'applications multiples, par exemple : échange de données bancaires, contrôle d'accès, authentification de signature, etc...

Lorsque le traitement de données comporte un grand nombre d'opérations arithmétiques semblables, il est avantageux de coupler à une unité centrale (CPU), à qui on réserve des fonctions de gestion assez globales, un organe de traitement spécialisé susceptible d'effectuer à grande vitesse un certain type d'opérations arithmétiques et/ou logiques, et ce, de manière relativement autonome par rapport à l'unité centrale, au moins pendant la durée d'une séquence d'opérations enchaînées consécutivement.

Un organe de traitement de ce genre et répondant à la définition donnée dans le paragraphe introductif est connu de la publication de la demande de brevet FR-A-2 613 861.

S'agissant d'un dispositif principalement destiné à être incorporé dans un microcontrôleur pour carte intelligente on doit s'attacher à économiser le plus possible les besoins en mémoire à intégrer sur le cristal du microcontrôleur, et également à utiliser au mieux la vitesse d'horloge qui, selon les technologies actuelles, est assez limitée. Finalement le but recherché est que la durée du traitement soit acceptable par l'utilisateur, par exemple que le temps d'attente d'un résultat de traitement reste si possible inférieur ou de l'ordre de la seconde.

Une analyse de l'organe de traitement connu montre que son fonctionnement doit être fréquemment interrompu notamment pour le chargement de nouvelles données à traiter sous la commande de l'unité centrale. Ces interruptions entraînent nécessairement un ralentissement très significatif de l'opération globale de traitement des données.

L'invention vise à fournir un organe de traitement arithmétique facilement intégrable dans un microcontrôleur, qui fonctionne avec un minimum de temps d'arrêt et qui permette également une réduction de l'emplacement mémoire à utiliser conjointement.

En effet, selon l'invention, un organe de traitement est caractérisé par la revendication 1.

Un organe de traitement selon une variante particulièrement intéressante de l'invention se caractérise en outre par la revendication 4.

On comprendra que, par comparaison avec l'organe de traitement connu, celui conforme à l'invention est plus efficace puisqu'il opère, en une séquence d'opérations consécutives, $\underline{k}$ (ou $\underline{p}$) lignes de multiplication du type a.X au lieu d'une seule.

Certes, le nombre de pas de calculs reste globalement équivalent pour obtenir le même résultat final (soit : x lignes de multiplication), mais par contre, le nombre d'interruptions correspondant aux appels de l'organe de traitement par l'unité centrale pour le lancement de chaque séquence d'opérations, se trouve divisé par $\underline{k}$ (ou par $\underline{p}$) avec l'organe de traitement de l'invention.

Ainsi qu'on le verra plus en détail dans ce qui suit, l'invention permet de réaliser une opération élémentaire de multiplication - avec ses deux additions associées -, à chaque cycle d'horloge, sans aucun temps mort pendant tout le déroulement d'une séquence d'opérations. Parallèlement, les pointeurs d'adresses correspondant aux données à traiter durant la séquence qui va suivre peuvent être chargés indépendamment par l'unité centrale, de sorte que d'une séquence à l'autre, l'interruption de l'organe de traitement peut être réduite au minimum.

Des moyens particuliers permettant d'obtenir ce résultat et qui sont liés à l'interface entre l'organe de traitement et l'unité jentrale font l'objet d'une demande de brevet français publiée sous le n° FR-A-2 656 710 déposée par la Demanderesse, sous le titre :"Microcontrôleur pour l'exécution rapide d'un grand nombre d'opérations décomposable en séquences d'opérations de même nature".

Différents modes pratiques de réalisation de l'invention se caractérisent par le choix du nombre k d'entrées pour les portions d'opérandes a[], soit k = 3 ce qui aboutit à une utilisation optimale du bus reliant l'organe de traitement à la mémoire de travail, bus qui est utilisé à chacun des pas d'un cycle de trois pas, soit k = 4, avec un cycle à quatre pas durant lequel, pour un temps de cycle, ledit bus n'est pas utilisé.

Une disposition particulièrement adaptée à certaines applications consiste à prévoir un nombre k d'entrées pour les portions opérandes a[] égal à 4, ainsi que des moyens de sélection d'entrées a[] pouvant, sur commande de l'unité centrale, opérer durant une séquence, soit sur 4 portions d'opérandes a[], soit encore sur 3 portions d'opérandes seulement, l'une des entrées - l'entrée a[4] par exemple - n'étant pas utilisée. On obtient alors une grande souplesse d'utilisation de l'organe de traitement en fonction des opérations spécifiques à réaliser à un moment donné du traitement, par exemple une opération de multiplication du type B = a.X + T, réalisée en cycles à 3 pas avec les portions d'opérandes a[1,2,3], suivie d'une réduction modulo N, de la forme : R = -q.N + T, réalisée en cycles à quatre pas, et dans laquelle q est un quotient entier de l'opération B/N, et T est le reste cumulé des opérations précédentes.

Selon un mode de réalisation avantageux de l'invention, l'organe de traitement, dans lequel lesdits premiers moyens de mémorisation de recyclage sont constitués par un premier registre tampon recevant en entrée la portion de poids forts du résultat à la sortie du deuxième additionneur, se caractérise en ce que lesdits seconds moyens de mémorisation de recyclage comportent une pile de (k-1) registres tampons dans lesquels les données mémorisées sont transférées pas-à-pas, en ce que lesdits moyens de commutation associés au recyclage comportent un premier et un deuxième multiplexeurs, et en ce que le premier registre tampon est relié en sortie, d'une part à une première entrée du premier multiplexeur lequel a une deuxième entrée reliée à l'entrée d'opérande $t_i$, et une sortie reliée à une entrée de l'un des additionneurs, et d'autre part, à une première entrée du deuxième multiplexeur lequel a une deuxième entrée reliée à la sortie de poids faible du deuxième additionneur et une sortie reliée à une entrée de l'autre additionneur, via ladite pile de (k-1) registres tampons.

Lorsque l'organe de traitement est prévu avec k entrées a[] et est susceptible de fonctionner en cycle réduit à p pas (où p < k), lesdits moyens de sélection de retard comportent avantageusement un multiplexeur dit "de court-circuit", susceptible d'éviter (k-p) registre(s) au cours du transfert de données dans la pile de registres tampons.

Avec l'invention, on obtient un dispositif particulièrement simple et compact dans lequel on prévoit, que, sous la commande du séquenceur, le premier multiplexeur est positionné pour transmettre sur sa sortie l'entrée d'opérande $t_i$, et le deuxième multiplexeur positionné pour transmettre sur sa sortie la donnée présentée en sortie du premier registre tampon, et ceci à chaque premier pas d'un cycle d'opérations, tandis que les premiers et deuxièmes multiplexeurs sont positionnés à l'inverse des positions précitées, lors des autres pas d'un cycle.

Une utilisation encore plus étendue de l'organe de traitement selon l'invention est obtenue selon une variante de réalisation caractérisée en ce que ledit organe comporte en outre un circuit "OU exclusif" interposé en sortie des résultats $b_i$ de manière à transformer le résultat $b_i$ en $b_i \oplus x$ , x étant soit une constante à n bits chargée dans un registre associé audit OU exclusif, soit l'opérande $x_i$, selon la position d'un multiplexeur additionnel recevant lesdites valeurs de x sur ses entrées et dont la sortie est appliquée à l'entrée du circuit OU exclusif conjointement avec la donnée de résultat $b_i$.

D'autres opérations que la multiplication et l'addition peuvent alors être réalisées, par exemple la recherche de l'opposé ou du complément à 2 d'un nombre entier élevé quelconque.

En ce qui concerne l'emplacement nécessaire en mémoire de travail, l'organe de traitement selon l'invention permet de maintenir celui-ci à un minimum du fait que, par le jeu des seconds moyens de mémorisation de recyclage, les données B et T peuvent être écrites au même emplacement mémoire puisqu'en général le résultat B d'une séquence d'opérations devient la donnée T (accumulateur) pour la séquence suivante.

D'autres particularités, détails et avantages de l'invention seront mis en évidence par la description qui va suivre, relative à des exemples non limitatifs et en regard des dessins dans lesquels :

la figure 1 représente un schéma-bloc d'un organe de traitement selon un premier mode de mise en oeuvre de l'invention, montrant également ses principales liaisons avec d'autres parties constituant ensemble un microcontrôleur intégré,

la figure 2 montre une vue, également sous forme de schéma-bloc, d' un organe de traitement similaire à celui de la figure 1, mais comportant plusieurs variantes de mise en oeuvre,

la figure 3 montre un schéma-bloc d'un organe de traitement dans un deuxième mode de mise en oeuvre de l'invention qui traite de manière simultanée un bit éventuel de débordement (de poids fort) de la portion d'opérande a[k].

la figure 4 est un schéma d'un organe de traitement selon un troisième mode de mise en oeuvre de l'invention, dans lequel on utilise notamment un additionneur supplémentaire, et

la figure 5 montre le schéma d'un organe de traitement selon un quatrième mode de mise en oeuvre de l'invention, qui est apparenté à celui de la figure 4 en ce qui concerne l'utilisation d'un additionneur supplémentaire.

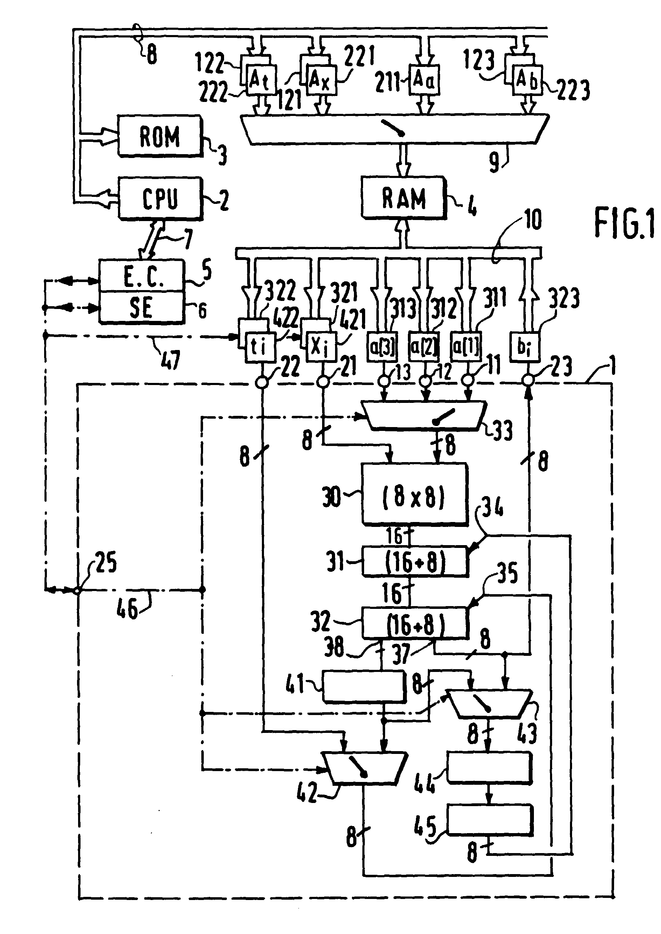

La figure 1 représente schématiquement un premier exemple d'organe de traitement selon l'invention. L'organe de traitement 1 est figuré à l'intérieur d'un cadre en tirets. Il comporte trois entrées 11, 12, 13 pour des portions d'opérandes a[1,2,3] ainsi qu'une entrée 21 pour l'opérande $x_i$, une entrée 22 pour un l'opérande $t_i$ et enfin une sortie 23 pour le résultat $b_i$. L'organe de traitement 1 comporte également un port 25 d'entrée et de sortie par où transitent les commandes de séquencement de l'organe de traitement 1, ainsi que les signaux d'état (statut).

L'organe de traitement 1 est destiné à être incorporé dans un microcontrôleur qui comporte par ailleurs une unité centrale 2 (CPU), une mémoire de programme 3 du type lecture seule, et une mémoire de travail 4 du type lecture et écriture. Le fonctionnement de l'organe de traitement 1 est géré à partir d'une unité de registres "état et commandes" 5 et d'un séquenceur 6, ces deux organes étant commandés à partir de l'unité centrale 2.

Par souci de clarté, seules les liaisons essentielles au fonctionnement de l'organe de traitement 1 ont été représentées sur la figure. C'est ainsi qu'en ce qui concerne les données émises ou reçues par l'unité centrale 2, il est usuel d'utiliser un bus dit bus interne de données dont seul un élément 7 à été représenté sur la figure, qui est relatif à la liaison avec l'unité de registres état et commandes 5 et avec le séquenceur 6.

En ce qui concerne les adresses, il est également usuel d'utiliser un bus dit bus interne d'adresses 8 reliant notamment l'unité centrale 2 à la mémoire de programme 3 et à la mémoire de travail 4. Conformément à la figure 1, on remarque que la mémoire de travail 4 n'est pas reliée directement au bus interne d'adresse 8 mais à travers un multiplexeur de commutation d'adresses 9 comportant sur ses entrées un ensemble de registres pointeurs d'adresses comprenant un registre double 122-222 pour les adresses de l'opérande $t_i$, un registre double 121-221 pour l'adresse de l'opérande $x_i$, un registre simple 211 pour les adresses de portions d'opérandes a[1...k], (le nombre $\underline{k}$ de portions d'opérandes a[] étant dans cet exemple égal à 3), et un registre double 123-223 pour les adresses du résultat $b_i$.

En ce qui concerne les données échangées entre la mémoire de travail 4 et l'organe de traitement 1, la figure 1 montre également une disposition particulièrement avantageuse qui utilise un bus dit "bus local" 10 distribuant les données sur les entrées de données 11, 12, 13, 21, 22 et recevant les données de résultat de la sortie 23. Cette liaison au bus local 10 est réalisée via un ensemble de registres de données comportant les registres 311, 312, 313 pour les données des portions d'opérandes a[1], a[2] et a[3] respectivement, un registre double 321, 421 pour l'opérande $x_i$, un registre double 322, 422 pour l'opérande $t_i$ et un ou plusieurs registre(s) 323 pour la donnée de résultat $b_i$.

Selon une disposition non représentée à la figure 1, par souci de clarté et du fait que cette disposition ne concerne pas directement le fonctionnement propre de l'organe de traitement 1, l'unité centrale 2 peut également accéder à la mémoire de travail 4 à l'aide d'un multiplexeur (non représenté) en lieu et place de l'accès par l'organe de traitement 1 au moyen du bus local 10.

Les registres doubles de pointeurs 122-222, 121-221, 123-223, ont pour chacun leur registre de tête chargé par l'unité centrale 2 avec l'adresse de départ, dans la mémoire de travail 4 où seront lues ou écrites les données à traiter, pour une séquence d'opérations. Les registres-images 222, 221, 223 des mêmes registres doubles, sont chargés sous la commande du séquenceur 6 à partir de leurs registres de tête correspondants puis décrémentés automatiquement sous la commande du séquenceur 6.

Les registres doubles de données 322-422 et 321-421 destinés respectivement aux opérandes $t_i$ et $x_i$, ont leur registre de tête 322, 321 qui sont chargés successivement pendant 2 pas du cycle d'horloge du bus local 10 tandis qu'au pas suivant est effectué le transfert simultané des données vers les registres images 422, 421, et qu'au même pas le bus local 10 est utilisé pour l'écriture dans la mémoire de travail de la donnée de résultat $b_i$ précédemment mémorisée dans le registre 323. Ainsi, le bus local 10 est donc occupé durant les trois pas d'un cycle d'opérations tandis que l'organe de traitement 1 effectue trois opérations de traitement combinant les opérandes $t_i$, $x_i$, successivement avec les portions d'opérandes a[1], a[2], a[3]. Comme on le verra également par la suite, l'organe de traitement 1 comporte des moyens de mémorisation de recyclage tels que pour les trois pas d'opérations formant un cycle à trois pas, une seule donnée de résultat est à inscrire en mémoire de travail 4.

Dans l'exemple représenté à la figure 1, on a choisi un format de données entrantes et sortantes dans l'organe de traitement 1 qui est uniforme, à 8 bits. Bien entendu on pourrait également choisir un autre format restreint (16 bits par exemple) pour le traitement des données.

L'organe de traitement 1 comporte essentiellement un multiplieur statique 30 de 8x8 bits destiné à effectuer le produit a[].$x_i$, un arrangement en série d'un premier additionneur 31, à 16 + 8 bits et d'un deuxième additionneur 32, à 16 + 8 bits ainsi que des moyens de mémorisation de recyclage permettant d'introduire le retard nécessaire de certaines données intermédiaires pour les recycler au moment convenable et obtenir une seule donnée de résultat pour trois pas d'opération.

Le multiplieur 30 reçoit en entrée d'une part, l'opérande $x_i$ provenant du registre de données 421 et d'autre part la donnée présente en sortie du multiplexeur de sélection de données 33 lequel permet d'appliquer successivement et par cycle à trois pas les portions d'opérandes a[1], a[2], a[3] provenant des registres de données 311, 312, 313. Le multiplieur 30 alimente en sortie, sous un format de 16 bits, une entrée du premier additionneur 31 tandis qu'une autre entrée 34 de cet additionneur reçoit des données sous un format de 8 bits provenant des moyens de mémorisation de recyclage. La sortie du premier additionneur 31, au format de 16 bits, est transmise en entrée du deuxième additionneur 32 lequel reçoit également sur une autre entrée 35 une donnée déterminée à format de 8 bits qui pour l'un des pas d'un cycle de trois pas, correspond à l'opérande $t_i$. Le deuxième additionneur 32 comporte deux sorties 37 et 38 de 8 bits. Les poids faibles du résultat présentés à la sortie 37 sont dirigés vers la sortie 23 et susceptibles d'être stockés dans le registre de données 323 en tant que données de résultat $b_i$. La sortie 38 concerne les 8 bits de poids forts du résultat de la sortie du deuxième additionneur 32 et sont dirigés sur un registre tampon 41 dont le rôle est essentiellement de retarder d'un pas de cycle la donnée de résultat présente dans ce registre. Le premier registre tampon 41, est relié en sortie d'une part à une première entrée d'un premier multiplexeur 42 dont une deuxième entrée est reliée à l'entrée 22 de l'opérande $t_i$ et dont la sortie est reliée à l'entrée 35 du deuxième additionneur 32. La sortie du premier registre tampon 41 est reliée d'autre part à une première entrée d'un deuxième multiplexeur 43 dont une deuxième entrée est reliée à la sortie 37 de poids faibles du deuxième additionneur 32, multiplexeur dont la sortie est reliée à l'entrée 34 du premier additionneur 31 via une pile de deux registres tampon 44 et 45, à 8 bits, dans lesquels les données mémorisées sont transférées pas à pas.

La pile de registres 44 et 45 constitue ce que l'on a appelé précédemment : "seconds moyens de mémorisation de recyclage", tandis que le premier multiplexeur 42 et le deuxième multiplexeur 43 constituent lesdits "moyens de commutation associés au recyclage".

Le fonctionnement de l'organe de traitement 1 au cours d'un cycle $\underline{i}$, à l'intérieur d'une séquence de traitement, peut être expliqué brièvement de la manière suivante :

a) Cycle i - premier pas
Position des multiplexeurs :
multiplexeur 33 en position de connexion vers l'entrée 11,
multiplexeur 42 en position vers l'entrée 22,
multiplexeur 43 en position vers la sortie du registre tampon 41.

Résultat en sortie du deuxième additionneur 32 = $x_i.a[1]$ + contenu actuel du registre 45 + opérande $t_i$.

Poids faibles du résultat $b_i$ mémorisés dans le registre 323
Transferts de données :
registre 44 vers registre 45,
registre 41 vers registre 44.
Mémorisation du poids fort du résultat en sortie 38 du deuxième additionneur 32, dans le registre 41.
Décrémentation du registre pointeur 222 (At) et chargement de l'opérande $t_{i+1}$ dans le registre 322.
b) Cycle i-deuxième pas
Position des multiplexeurs :
multiplexeur 33 placé en position vers l'entrée 12,
multiplexeur 42 positionné vers la sortie du registre 41 et,
multiplexeur 43 positionné vers la sortie de poids faibles 37 du deuxième additionneur 32
Résultat en sortie du deuxième additionneur 32 :
= $x_i.a[2]$ + contenu actuel du registre 45 + contenu actuel du registre 41
Transferts de données :
registre 44 vers registre 45
poids faibles du résultat en sortie 37 du deuxième additionneur 32 mémorisés dans le registre 44
poids forts du résultat en sortie 38 du deuxième additionneur 32 mémorisés dans le registre 41
Décrémentation du registre pointeur 221 ($A_x$) et chargement de l'opérande $x_{i+1}$ dans le registre 321
c) Cycle i troisième pas
Position des multiplexeurs :
multiplexeur 33 positionné vers l'entrée 13,
multiplexeur 42 positionné vers la sortie du registre 41,
multiplexeur 43 positionné vers la sortie 37, de poids faibles, du deuxième additionneur 32.

$$\text{Résultat de l'opération} = x_i.a[3] + \text{contenu actuel du registre 45} + \text{contenu actuel du registre 41}$$

Transferts de données :
registre 44 vers registre 45,
poids faibles du résultat en sortie 37 du deuxième additionneur 32 mémorisés dans le registre 44,
poids forts du résultat en sortie 38 du deuxième additionneur 32 mémorisés dans le registre 41.
Décrémentation du registre pointeur 223 ($A_b$) et écriture de la donnée de résultat $b_i$ dans la mémoire de travail 4, à partir du registre 323.
Transfert simultané des données des registres d'opérandes,
registre 322 vers registre 422 ($t_{i+1}$), et
registre 321 vers registre 421 ($x_{i+1}$)

L'organe de traitement 1 est prêt à effectuer le premier pas du cycle suivant i + 1.

Durant toute la séquence en cours, les portions d'opérandes a[1,2,3] sont maintenues fixes tandis que les opérandes $t_i$ et $x_i$ varient à chaque cycle de trois pas. Au premier pas du cycle i+1 une nouvelle donnée de résultat sera mémorisée dans le registre 323 alors qu'au troisième pas de ce cycle, ce résultat sera inscrit dans la mémoire de travail 4. Il y a lieu de préciser que les transferts de données par exemple au sein de la pile de registres 44, 45 pour le recyclage des données est opéré d'une façon synchrone.

Le fonctionnement de l'organe de traitement 1 tel qu'il a été décrit ci-dessus montre que la portion de poids faibles du résultat en sortie du deuxième additionneur 32 se trouve retardée de deux pas de calcul, pour tout pas de calcul différent d'un premier pas de son cycle associé par le jeu des registres 44 et 45, tandis que la portion de poids forts du résultat en sortie du deuxième additionneur 32, lors du premier pas d'un cycle, se trouve retardée de trois pas de calcul par l'effet du retard supplémentaire apporté par son passage dans le registre 41.

Dans l'application envisagée, les données $\underline{T}$ et $\underline{X}$ sont des entiers ayant un nombre élevé de bits (512 bits par exemple) de sorte qu'une séquence d'opérations formée de cycles successifs à trois pas peut être effectuée de manière quasiment autonome par l'organe de traitement 1. Pendant ce temps, l'unité centrale 2 dispose du temps nécessaire pour recharger les pointeurs d'adresses initiales des opérandes $t_1$ et $x_1$ ainsi que du résultat $b_1$, en vue de la séquence qui va suivre.

Les portions d'opérandes a[1, 2, 3] seront chargées dans les registres 311, 312, 313 au cours d'un cycle particulier à trois pas effectué au début de chaque séquence, le registre pointeur 211 ($A_a$) étant incrémenté par le séquenceur 6 à partir de sa valeur initiale chargée par l'unité centrale 2.

A la fin d'une séquence de traitement, lorsque les données des opérandes $t_i$ et $x_i$ sont épuisées, il y a lieu de "vider" l'organe de traitement 1 des données qui y sont mémorisées notamment dans les registres 41, 44 et 45. Ceci s'obtient aisément en conservant le même processus de fonctionnement et en introduisant la valeur zéro en tant qu'opérande $t_i$ et $x_i$.

Il est clair que ces valeurs zéro peuvent être mémorisées dans la mémoire de travail 4 à la suite des données $\underline{T}$ et $\underline{X}$. Toutefois les emplacements correspondants en mémoire de travail 4 peuvent avantageusement être économisés lorsqu'on prévoit des registres de données 321 et 322 pouvant être forcés à zéro par le séquenceur 6. D'une séquence d'opérations à la suivante, les portions d'opérandes a[1,2,3] sont avantageusement pris dans l'ordre de décroissance des poids de la donnée A dont lesdits opérandes constituent des extraits. Pour le début de la séquence suivante, le registre pointeur d'adresses 211 (Aa) se trouve correctement positionné et en conséquence l'unité centrale n'a pas à intervenir.

D'une manière générale, les liaisons de commande n' ont pas été représentées à la figure 1, pour des raisons de clarté de la figure. Par exception, et à titre d'exemple, un port de commandes 25 a été représenté avec une liaison symbolisée par une ligne en traits mixtes vers l'unité de registres état et commandes 5 ainsi que vers le séquenceur 6 tandis qu'à l'intérieur de l'organe de traitement 1, ces liaisons ont été symbolisées également en traits mixtes par un bus 46 réalisant les commandes des multiplexeurs 33, 42, 43.

On a également représenté de manière symbolique, une liaison de commande 47, externe à l'organe de traitement 1, opérant le transfert des données dans les registres de données 321-421 et 322-422, ainsi que le forçage à O des registres 321 et 322 mentionnés précédemment.

Le séquenceur 6, constitué essentiellement d'une pluralité de bascules rythmées à la fréquence d'horloge, ne nécessite pas de description détaillée du fait que les conditions de séquencement de l'organe de traitement 1 se déduisent par pure logique du processus de fonctionnement décrit plus haut.

L'unité de registres état et commandes 5 contient quelques registres dans lesquels sont inscrites les informations d'état de fonctionnement de l'organe de traitement 1 (arrêt ou état de marche...), le nombre de cycles à effectuer dans une séquence, ainsi que le nombre de pas pendant lesquels les registres de données 321 et 322 doivent être forcés à zéro à la fin d'une séquence déterminée. Il suffit d'indiquer que l'unité de registres état et commandes 5 comporte dans ce but un compteur de cycle et plusieurs registres dans lesquels sont inscrites des limites de nombre de cycles à effectuer dans des conditions particulères (début de séquence et fin de séquence). L'unité de registres état et commandes 5 peut être construite de toute manière connue. Elle est agencée de manière à satisfaire à des conditions logiques qui sont simples à déterminer et qu'il n'est pas nécessaire de décrire ici en détail.

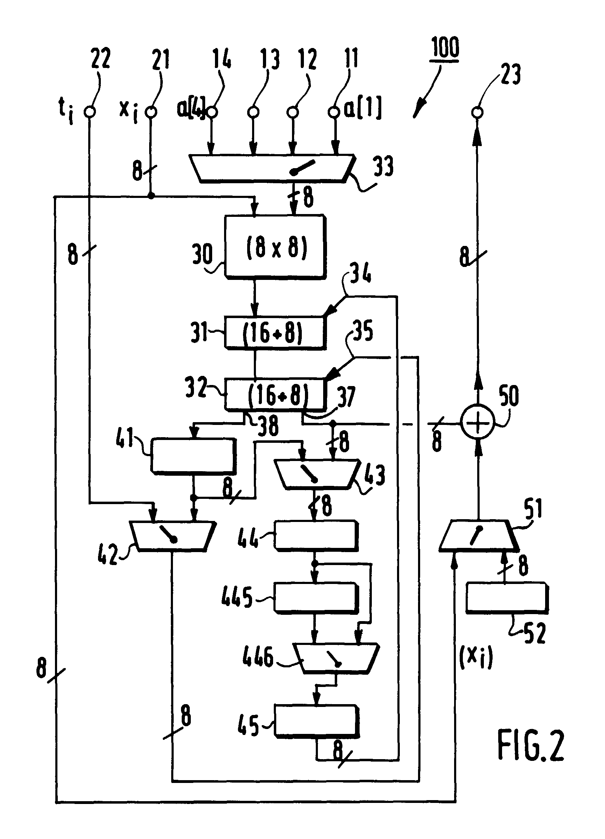

La figure 2 représente un organe de traitement 100, analogue dans son principe à l'organe de traitement 1 de la figure 1, mais dans lequel ont été introduites quelques variantes d'exécutions. Les éléments de la figure 2 ayant les mêmes fonctions que les éléments de l'organe de traitement 1 de la figure 1 ont été affectés des mêmes signes de référence.

Tout d'abord le nombre $\underline{k}$ d'entrées pour l'entrée des portions d'opérandes a[] est porté ici à 4 de sorte que le nombre de registres de données 311-313 de la figure 1 est également augmenté d'un registre, relié à l'organe de traitement 100 à une entrée 14, pour une portion d' opérande a[4]. De même le multiplexeur de sélection de données 33 comporte maintenant quatre positions de sélection vers l'une des entrées 11 à 14. L'organe de traitement 100 peut être activé pour fonctionner par cycle à quatre pas effectuant durant une séquence d'opération l'équivalent de quatre "lignes" de multiplication simultanées. Pour obtenir une mémorisation de recyclage des données qui soit convenable dans un cycle à quatre pas, la pile de registres tampon comporte maintenant trois registres 44, 445 et 45 (au lieu de deux comme dans le cas de l'organe de traitement 1 de la figure 1). Dans un cycle à quatre pas, la portion de poids faibles du résultat à la sortie 37 du deuxième additionneur 32 sera donc retardée de trois pas de calcul pour tous pas de calcul différents d'un premier pas d'un cycle. Le retard est porté à quatre pas en ce qui concerne la portion de poids forts du résultat en sortie 38 du deuxième additionneur 32 par le passage de cette donnée dans le registre tampon 41, retard qui est introduit lors de chaque premier pas d'un cycle.

Si l'organe de traitement 100 peut fonctionner par cycle à quatre pas, utilisant quatre portions d'opérandes a [1,2,3,4], il peut également fonctionner avec un nombre réduit d'opérandes par exemple trois portions d'opérandes seulement, les cycles d'opérations étant ramenés à trois pas comme dans le cas de l'organe de traitement 1 de la figure 1. Pour ce faire, il suffit que l'unité de registre état et commandes et le séquenceur disposent des moyens nécessaires à commander le multiplexeur de sélection de données 33 pour l'utilisation soit de quatre portions d'opérandes a[] soit de trois portions d'opérandes seulement, ceci pour la durée complète d'une séquence d'opérations. Parallèlement, lorsque l'on fonctionne à cycles à trois pas et un nombre de portions d'opérandes a[] réduit à trois, il y a lieu de diminuer d'un registre la pile de registre tampon 44-45 pour retrouver le retard convenable dans le recyclage des données intermédiaires. Ceci est réalisé en évitant l'un des registres de la pile des registres, le registre 445 par exemple, au moyen d'un multiplexeur de "court-circuit" 446. L'organe de traitement 100 est par conséquent d'une utilisation très flexible en fonction des applications et permet à chaque séquence, de choisir le mode de fonctionnement le mieux adapté au traitement effectuer. L'utilisation de 4 portions d'opérandes a[1 à 4] ou de 3 portions d'opérandes a[1 à 3] seulement est obtenue simplement par une commande appropriée du multiplexeur de sélection de données 33 ainsi qu'une commande de positionnement du multiplexeur 446 évitant ou non le registre tampon 445.

L'organe de traitement 100 de la figure 2 comporte une autre variante par rapport à celui représenté à la figure 1, qui consiste à interposer un circuit OU exclusif 50 entre la sortie de poids faibles 37 des résultats et la borne de sortie 23. Les résultats de données en sortie 23 résultent donc de l'opération OU exclusif entre la sortie de poids faibles du deuxième additionneur 32 et une valeur choisie au moyen d'un multiplexeur additionnel 51 parmi l'opérande $x_i$ ou le contenu x d'un registre 52 à 8 bits, chargé par l'unité centrale d'une constante déterminée qui peut être par exemple la valeur zéro ou la valeur hexadécimale FF (c'est-à-dire tous les bits à 1). Cette disposition permet d'accroître les possibilités de traitement de l'organe de traitement 100 en fonction des besoins de l'application envisagée, par exemple lors-qu'on recherche la valeur opposée d'un nombre de longueur quelconque et éventuellement le complément à 2 dudit nombre par addition de 1 à l'opposé du nombre. Dans un mode pratique de mise en oeuvre, et comme il a été indiqué à la figure 2, on peut réaliser un organe de traitement 100 qui traite des données d'opérandes étant toutes au format de 8 bits. Ceci n'est cependant pas une nécessité et on pourrait choisir tout aussi bien un autre format de données à traiter par l'organe de traitement 100. On pourrait également augmenter le nombre $\underline{k}$ de portions d'opérandes a[]. Il suffit pour cela de prévoir un multiplexeur 33 ayant le nombre voulu d'entrées, et d'augmenter le nombre de registres de la pile 44-45 pour la porter à (k-1) registres.

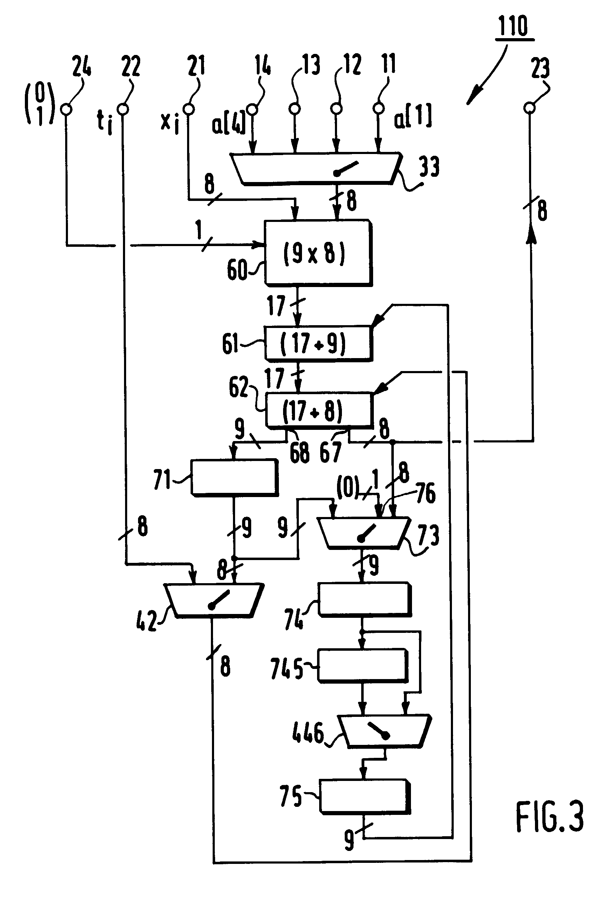

La figure 3 présente le schéma d'un autre exemple d'organe de traitement selon l'invention. L'organe de traitement 110 de la figure 3 est relatif à une application particulière dans laquelle 1 bit de débordement de poids fort est susceptible d'apparaître sur la portion de l'opérande a[4] en dehors du format à 8 bits utilisé. La prise en compte d'un bit de débordement à 1 ou à 0 est effectuée par l'organe de traitement 110 à partir d'une borne d'entrée supplémentaire 24 à 1 bit. Ce bit de débordement peut être reçu par exemple d'un registre de statut dans lequel il a été stocké comme résultant d'une opération précédente. Les autres entrées d'opérandes 22 ($t_i$), 21 ($x_i$) ainsi que les entrées 11 à 14 (a [1...4]) sont semblables à celles de l'organe de traitement 100 de la figure 2, à format de 8 bits. Il en va de même pour la sortie de résultat 23, également à 8 bits.

Le bit unique de débordement est traité par l'organe de traitement 110 simultanément à une opération de traitement en utilisant un multiplieur 60 de (9x8) bits, à sortie à 17 bits, un premier additionneur 61 à (17 + 9) bits et un deuxième additionneur 62 à (17 + 8) bits. Du fait que le bit de débordement est à associer à la portion d'opérande a[4], c'est donc au quatrième pas de chaque cycle que ce bit, lorsqu'il est à 1, doit intervenir dans le calcul. Une sortie de poids forts 68, à 9 bits, du deuxième additionneur 62 est alors transmise au registre tampon 71 à 9 bits, tandis qu'au premier pas du cycle suivant le résultat mémorisé dans le registre 71 est transféré dans la pile de registres 74-75, registres qui sont également à 9 bits. Pour les autres pas d'un cycle qui concernent les portions d'opérandes a[1] à a[3] le bit de débordement n'existe pas, l'entrée 24 est à zéro et en réalité le traitement s'effectue à 8 bits de sorte que la sortie 68 de poids fort du deuxième additionneur 62 se trouve en fait avec son neuvième bit à 0. Aussi, une entrée pour un neuvième bit du premier multiplexeur 42 n'est pas nécessaire et le multiplexeur 42 est identique à son équivalent des figures 1 ou 2.

En ce qui concerne les résultats de poids faibles à la sortie 67 du deuxième additionneur 62, ces résultats sont toujours prélevés au format de 8 bits, et lorsque, en dehors d'un premier pas d'un cycle, ces données sont recyclées dans la pile de registres 74-75, un neuvième bit à 0 est introduit dans ladite pile de registres au moyen d'une entrée supplémentaire 76 du deuxième multiplexeur 73, entrée qui est, constamment, forcée à 0. Comme indiqué sur la figure, on peut également désirer réduire le nombre de pas d'un cycle de quatre à trois c'est-à-dire de n'utiliser que les portions d'opérandes a[1,2,3] ce qui est réalisé comme indiqué dans la précédente figure par une commande particulière du multiplexeur de sélection de données 33 ainsi que par un multiplexeur "de court-circuit" 446 permettant d'éviter l'un des registres de la pile de registres tampon 74-75, par exemple le registre 745.

En définitive, l'organe de traitement 110 de la figure 3 fonctionne de manière très comparable à l'organe de traitement 100 de la figure 2. Il permet au cours d'une séquence d'opérations composée de cycle à quatre pas d'effectuer les opérations sur quatre portions d'opérandes a[1 à 4] simultanément avec un éventuel bit supplémentaire de débordement de la portion d'opérande a[4] sans être obligé de recourir à une séquence supplémentaire pour traiter ce bit unique.

Bien que l'organe de traitement 110 de la figure 3 ait été décrit sur un exemple dans lequel le format des opérandes est à 8 bits, il est clair que toute autre valeur de format restreint pourrait également être utilisée. Le mode de réalisation de la figure 3 concerne plus généralement, un organe de traitement 110 qui, pour le traitement d'opérandes à $\underline{n}$ bits, comporte un multiplieur 60 agencé pour traiter (n+1) x (n) bits, un premier additionneur 61 à (2n+1) + (n+1) bits, et un deuxième additionneur 62, à (2n+1) + n bits, dans lequel le premier registre tampon 71, ainsi que les registres 74, 745 et 75 de la pile de registres sont au format de (n+1) bits, et qui comporte encore un deuxième multiplexeur 73 à trois entrées, une première entrée à (n+1) bits recevant le contenu du premier registre tampon 71, une deuxième entrée à $\underline{n}$ bits recevant la sortie 67 de poids faibles du deuxième additionneur 62 et recevant, par une entrée supplémentaire 76 à 1 bit, forcée à zéro, un (n+1)ième bit de poids fort à recycler dans la pile de registres 74, 745 et 75.

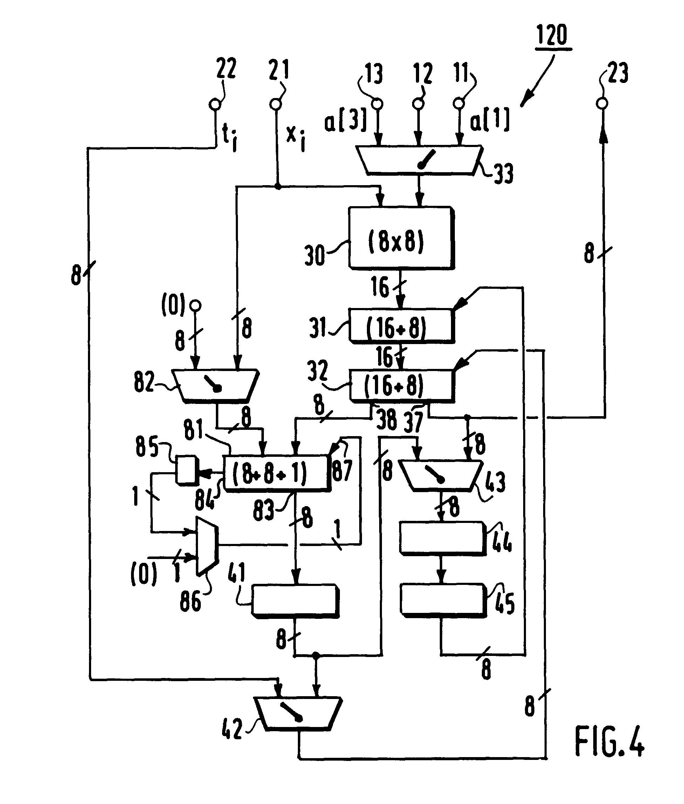

La figure 4 représente un autre exemple de réalisation d'un organe de traitement selon l'invention. L'organe de traitement 120 peut être considéré comme une variante d'exécution de l'organe de traitement 1 de la figure 1, dont il incorpore d'ailleurs tous les éléments réprésentés avec les mêmes signes de référence. Il comporte 3 entrées 11, 12, 13 pour les portions d'opérandes a[1 à 3] et fonctionne par conséquent en séquences formées de cycles à trois pas. Toutefois, grâce à quelques organes supplémentaires, par rapport à la structure schématisée à la figure 1, l'organe de traitement 120 est également capable de traiter simultanément un bit supplémentaire de débordement représentant un poids fort de rang juste supérieur à la portion d'opérande a[3].

Le mode de mise en oeuvre représenté, repose sur l'idée que, lorsque le bit de débordement est effectivement présent, après avoir effectué l'opération $a[3].x_i$ le résultat est obtenu lorsqu'on ajoute encore une fois $x_i$ avec un décalage de poids convenable, c'est-à-dire un décalage de 8 bits. Cette opération est réalisée essentiellement au moyen d'un troisième additionneur 81 à (8+8+1) bits, recevant sur une première entrée à 8 bits la portion de poids forts du résultat à la sortie 38 du deuxième additionneur 32, sur une deuxième entrée à 8 bits, recevant soit la valeur de l'opérande $x_i$, soit la valeur zéro sur 8 bits, au choix d'un troisième multiplexeur 82. Le troisième additionneur 81 comporte une première sortie 83 à 8 bits reliée à l'entrée du premier registre tampon 41, ainsi qu'une deuxième sortie 84 à 1 bit, dite sortie de retenue, dont la valeur est mémorisée dans un registre de retenue 85, à 1 bit, en vue de son recyclage avec un retard de trois pas sur une troisième entrée 87, du troisième additionneur 81 via un quatrième multiplexeur 86 dit "de remise à zéro".

Un éventuel bit de débordement de la portion d'opérande a[3], est mémorisé par tout moyen convenable, par exemple dans un registre de l'unité de registres état et commandes 5 (figure 1). Il est essentiellement à prendre en compte au troisième pas d'un cycle, en même temps que l'on effectue l'opération :

$a[3].x_i$ + contenu actuel du registre 45 + contenu actuel du registre 41 ainsi que cela a été expliqué à propos de la figure 1.

On effectue dans ce cas une addition supplémentaire de l'opérande $x_i$ avec la portion de poids forts du résultat en sortie 38 du deuxième additionneur 32. Ceci est obtenu en positionnant troisième multiplexeur 82 de le manière à transmettre sur sa sortie l'opérande $x_i$.

Cette addition est susceptible de provoquer une retenue qui est mémorisée dans le registre 85, tandis que les 8 bits restants sont mémorisés dans le premier registre tampon 41, en vue de leur recyclage dans la pile de registres 44-45 au premier pas du cycle suivant.

Dans tous les autres cas, c'est-à-dire lorsque le bit de débordement n'est pas à 1, ou que l'on effectue les opérations sur les portions d'opérandes a[1] ou a[2] (premier ou deuxième pas de cycle), le troisième multiplexeur 82 est positionné pour transmettre la valeur zéro ce qui revient à ce que le troisième additionneur 81 n'ait plus d'effet dans la transmission de la portion de poids forts du résultat vers le premier registre tampon 41.

Il y a lieu de noter toutefois que le bit de retenue mémorisé dans le registre de retenue 85, sera réintroduit à l'addition dans le troisième additionneur 81 avec un retard de trois pas, c'est-à-dire, en fait, à chaque troisième pas d'un cycle.

Pour le premier et le deuxième pas de chaque cycle, le multiplexeur de remise à zéro 86, est positionné pour transmettre un zéro en sortie.

L'organe de traitement 120 fonctionne par ailleurs d'une manière très similaire à celle déjà décrite à propos de l'organe de traitement 1 de la figure 1.

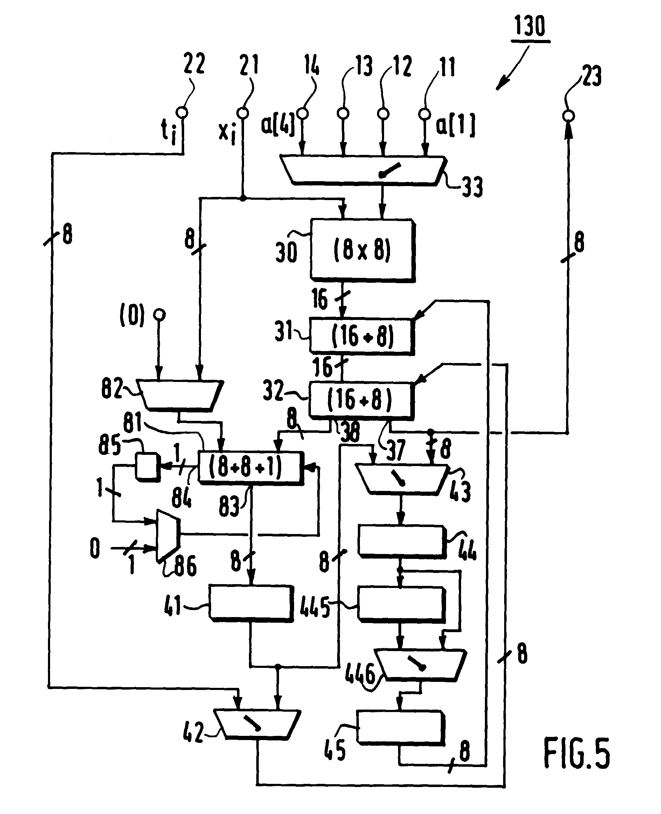

La figure 5 représente un autre mode de réalisation d'un organe de traitement 130 selon l'invention. L'organe de traitement 130 représenté s'apparente à l'organe de traitement 120 de la figure 4 dans lequel le nombre d'entrées des portions d'opérandes a[] a été porté à quatre. Il est donc constitué des mêmes éléments que ceux incorporés dans l'organe de traitement 120 de la figure 4, à l'exception du multiplexeur de sélection de données 33 qui est à quatre entrées ainsi que la pile de registres tampon 44-45 faisant partie des moyens de mémorisation de recyclage qui comporte comme dans le cas de la figure 2 un registre supplémentaire 445 de manière à procurer le retard convenable dans le recyclage des données intermédiaires. De même qu'avec l'organe de traitement 100 décrit à la figure 2, il était possible de réduire le nombre de portions d'opérandes a[] de quatre à trois pour certaines séquences déterminées, il est également possible de prévoir cette possibilité dans l'organe de traitement 130 de la figure 5. Il suffit de prévoir un multiplexeur de court circuit 446 permettant d'éviter l'un des registres de la pile de registres 44-45 et rétablir ainsi le recyclage convenable lorsque l'organe de traitement doit fonctionner en cycles à trois pas. Le fonctionnement de l'organe de traitement 130, pour le reste, se déduit aisément de la description donnée précédemment à propos des figures 2 et 4.

Il doit être entendu que par rapport aux exemples donnés précédemment, d'autres variantes de mises en oeuvre de l'invention sont encore possibles par substitution de moyens équivalents à ceux décrits. Par ailleurs le complément consistant à ajouter en sortie la combinaison d'un OU exclusif avec la donnée de résultat, tel que décrit à la figure 2, peut être incorporé à volonté dans n'importe quel autre exemple décrit. S'il est avantageux pour la mise en oeuvre pratique de l'invention d'utiliser, tel que décrit dans les exemples, un format d'opérandes à 8 bits il est clair que tout autre format pourrait aussi bien être adopté pour la construction d'un organe de traitement conforme à l'invention.

Il y a lieu de noter que l'organe de traitement selon l'invention peut être intégré aisément en association avec une unité centrale de microcontrôleur d'un type connu, notamment le microcontrôleur 8051 conçu par la société INTEL, qu'il utilise alors sans aucune modification de son jeu d'instructions standard. L'unité de registres état et commandes associée à l'organe de traitement de l'invention est constituée par une partie des registres dits "de fonctions spéciales" (SFR), prévus dans ce microcontrôleur.

## Revendications

1. Organe de traitement arithmétique intégré conjointement à une unité centrale (2) de microprocesseur, à un séquenceur (6) et à une mémoire de travail (4) de type lecture et écriture, pour effectuer une opération correspondant à la formule générale :

$$B = a.X + T$$

dans laquelle B, X, et T sont des nombres entiers ayant un nombre élevé de bits, et $\underline{a}$ est un opérande à format restreint à $\underline{m}$ bits, petit par rapport audit nombre élevé de bits, opération qui est produite durant une séquence d'étapes de calculs successifs consistant à combiner l'opérande a avec des opérandes $x_i$ et $t_i$, qui dans un format à $\underline{n}$ bits, petit par rapport audit nombre élevé de bits, correspondent à des portions successives de $\underline{n}$ bits contigus respectivement des entiers X et T, chacune de ces portions prise au rang de poids $\underline{i}$ croissant, et à mémoriser un résultat partiel d'opération $b_i$, de même rang de poids $\underline{i}$, constituant une portion à $\underline{n}$ bits parmi l'ensemble des portions successives de $\underline{n}$ bits contigüs du résultat complet B de ladite opération, l'organe de traitement comportant des entrées (11, 21, 22) pour les opérandes a, $x_i$ et $t_i$, et une sortie (23) pour le résultat partiel d'opération $b_i$, un multiplieur (30) pour effectuer le produit a.$x_i$ suivi d'un arrangement en série d'un premier (31) et d'un deuxième (32) additionneurs, le deuxième additionneur délivrant à sa sortie (37, 38) un résultat d'addition décomposable, d'une part, en une portion de poids forts, et d'autre part en une portion de poids faibles, à $n$ bits, pouvant être dirigée en sortie (23) comme résultat partiel d'opération $b_i$, l'opérande $t_i$ étant appliqué sur l'une des entrées (35) de l'un (32) des additionneurs tandis que sur l'une des entrées (34) de l'autre additionneur (31) est appliquée, à l'aide de premiers moyens de mémorisation de recyclage (41), la portion de poids forts dudit résultat d'addition provenant d'une précédente étape de calcul,
caractérisé en ce que cet organe (1) comporte :

- $k$ entrées (11, 12, 13) parallèles pour l'entrée de $k$ portions d'opérande a[1...k] de rangs successifs, mutuellement exclusifs, de l'opérande a,
- des moyens de sélection d'entrée (33) opérant selon un cycle de $k$ pas, consistant à appliquer à l'une des entrées du multiplieur (30), successivement, lesdites portions d'opérandes a[1...k] tandis que les opérandes $x_i$ et $t_i$ sont maintenus inchangés durant ce cycle,
- des seconds moyens de mémorisation de recyclage (44, 45) pour retarder de (k - 1) pas de calcul la portion de poids faibles dudit résultat d'addition obtenu lors de tous les pas de calcul différents d'un premier pas de cycle
- et des moyens de commutation (43) associés au recyclage, permettant de coupler lesdits premiers moyens de recyclage (41) auxdits second moyens de mémorisation de recyclage afin de retarder de $k$ pas de calcul la portion de poids forts dudit résultat d'addition obtenu lors du premier pas d'un cycle, l'opérande $t_i$ étant présenté à l'addition et le résultat partiel d'opération $b_i$ étant dirigé en sortie (23) au cours du seul premier pas d'un cycle.

2. Organe de traitement (1) selon la revendication 1, caractérisé en ce que le nombre $k$ d'entrées pour les portions d'opérandes a[] est égal à 3.

3. Organe de traitement (100) selon la revendication 1, caractérisé en ce que le nombre $k$ d'entrées pour les portions d'opérandes a[] est égal à 4.

4. Organe de traitement (100, 110, 130) selon la revendication 1, caractérisé en ce que les moyens de sélection d'entrées (33) peuvent être commandés par l'unité centrale pour appliquer, pour la durée d'une séquence d'opérations, un nombre réduit $p$ de portions d'opérandes a[1...p] à l'entrée du multiplieur (30), (60), selon un cycle à $p$ pas, le nombre $p$ étant inférieur à $k$ et au moins égal à 3, et en ce qu'il comporte des moyens de sélection de retard (446) susceptibles de réduire de (k - p) le nombre de pas de retard au sein des seconds moyens de mémorisation de recyclage (44, 445, 45) lorsque le nombre réduit $p$ de portions d'opérandes est utilisé.

5. Organe de traitement (1) selon la revendication 1, dans lequel lesdits premiers-moyens de mémorisation de recyclage sont constitués par un premier registre tampon (41) recevant en entrée la portion de poids forts dudit résultat d'addition à la sortie (38) du deuxième additionneur (32), caractérisé en ce que lesdits seconds moyens de mémorisation de recyclage comportent une pile de (k - 1) registres tampons (44, 45) dans lesquels les données mémorisées sont transférées pas a pas, en ce que lesdits moyens de commutation associés au recyclage comportent un premier (42) et un deuxième (43) multiplexeur, et en ce que le premier registre tampon (41) est relié en sortie, d'une part, à une première entrée du premier multiplexeur (42) lequel a une deuxième entrée reliée à l'entrée (22) d'opérande $t_i$ et une sortie reliée à une entrée (35) de l'un (32) des additionneurs, premier registre tampon dont la sortie d'autre part est reliée à une première entrée du deuxième multiplexeur (43) lequel a une deuxième entrée reliée à la sortie (37) de poids faibles du deuxième additionneur (32) et une sortie reliée à une entrée de l'autre additionneur (31), via ladite pile de (k-1) registres tampons (44, 45).

6. Organe de traitement (100) selon la revendication 4, dans lequel lesdits premiers moyens de mémorisation de recyclage sont constitués par un premier registre tampon (41) recevant en entrée la portion de poids forts dudit résultat d'addition à la sortie (38) du deuxième additionneur (32), caractérisé en ce que lesdits seconds moyens de mémorisation de recyclage comportent une pile de (k - 1) registres tampons (44, 445, 45) dans lesquels les données mémorisées sont transférées pas à pas, en ce que lesdits moyens de sélection de retard comportent un multiplexeur (446) dit de "court-circuit", susceptible d'éviter (k - p) registre(s) (445) au cours du transfert de données dans ladite pile de registres, en ce que lesdits moyens de commutation associés au recyclage comportent un premier (42) et un deuxième (43) multiplexeur, et en ce que le premier registre tampon (41) est relié en sortie, d'une part, à une première entrée du premier multiplexeur (42) lequel a une deuxième entrée reliée à l'entrée (22) d'opérande $t_i$, et une sortie reliée à une entrée (35) de l'un (32) des additionneurs, premier registre tampon (41) dont la sortie est reliée d'autre part à une première entrée du deuxième multiplexeur (43) lequel a une deuxième entrée reliée à la sortie de poids faibles du deuxième additionneur (32) et une sortie reliée à une entrée de l'autre additionneur (31), via ladite pile de (k - 1) registres tampons (44, 445, 45).

7. Organe de traitement (110) selon la revendications 6, caractérisé en ce que, en vue du traitement simultané d'un bit éventuel de débordement de poids forts de la portion d'opérande a[k], il comporte une entrée (24) supplémentaire pour ledit bit de débordement, reliée à une entrée supplémentaire du multiplieur (60) agencé pour traiter (n + 1) . (n) bits, en ce que le premier additionneur (61) est agencé pour traiter (2n + 1) + (n + 1) bits, et le deuxième additionneur (62), pour traiter (2n + 1) + n bits, en ce que le premier registre tampon (71) ainsi que les registres tampons (74, 745, 75) de la pile de registres sont au format (n + 1) bits, en ce que le deuxième multiplexeur (73) reçoit sur sa première entrée le contenu du premier registre tampon (71) au format (n + 1) bits et sur sa deuxième entrée, d'une part la sortie de poids faibles, à n bits, du deuxième additionneur (62), et d'autre part un (n + i)ième bit de poids fort, d'une entrée supplémentaire (76) dudit multiplexeur (76), forcée à zéro, tandis que le premier multiplexeur (42) a ses deux entrées et sa sortie au format de $\underline{n}$ bits, le (n + 1)ième bit de sortie du premier registre tampon (71) étant ignoré, et que la sortie (23) du résultat partiel d'opération $b_i$ est également à $\underline{n}$ bits.

8. Organe de traitement (120) selon la revendication 5, caractérisé en ce que, en vue du traitement simultané d'un bit éventuel de débordement de poids fort de la portion d'opérande a[k], il comporte un troisième additionneur (84) à trois entrées, dont la première entrée à n bits reçoit la portion de poids forts dudit résultat d'addition à la sortie (38) du deuxième additionneur (32), dont la deuxième entrée à n bits reçoit soit la valeur de l'opérande $x_i$, soit une valeur de $\underline{n}$ bits à zéro, au choix d'un troisième multiplexeur (82), troisième additionneur (84) qui comporte une première sortie (83) à n bits, reliée à l'entrée dudit premier registre tampon (41) et comporte une deuxième sortie à 1 bit, dite sortie de retenue, dont la valeur est mémorisée dans un registre de retenue (85) à 1 bit en vue d'un recyclage de retenue, à $\underline{k}$ pas, sur la troisième entrée (87) du même troisième additionneur (84) via un quatrième multiplexeur (86) de remise à zéro, et en ce que ledit troisième multiplexeur (82) est positionné pour transmettre sur sa sortie l'opérande $x_i$ lorsqu'un bit de débordement est à prendre en compte en même temps que la portion d'opérande a[k], et est positionné pour transmettre la valeur zéro dans tous les autres cas.

9. Organe de traitement selon l'une des revendications 5 à 8, caractérisé en ce que, sous la commande du séquenceur, le premier multiplexeur (42) est positionné pour transmettre sur sa sortie l'entrée d'opérande $t_i$, et le deuxième multiplexeur (43) positionné pour transmettre sur sa sortie la donnée présentée en sortie du premier registre tampon (41), (71), et ceci à chaque premier pas d'un cycle d'opérations, tandis que le premier et le deuxième multiplexeur sont positionnés à l'inverse des positions précitées, lors des autres pas d'un cycle.

10. Organe de traitement selon l'une quelconque des revendications 1 à 9, caractérisé en ce que la valeur de $\underline{n}$ dudit format restreint est de 8 bits.

11. Organe de traitement selon l'une des revendications 1 à 10, caractérisé en ce qu'il comporte en outre un circuit "OU exclusif" (50) interposé sur la sortie (23) du résultat partiel d'opération $b_i$ de manière à transformer ce résultat $b_i$ en $b_i \oplus x$, $\underline{x}$ étant soit une constante à n bits chargée dans un registre (52) associé audit circuit OU exclusif, soit l'opérande $x_i$, selon la position d'un multiplexeur additionnel (51) dont la sortie est appliquée à l'entrée du circuit OU exclusif conjointement avec le résultat partiel d'opération $b_i$.

**Patentansprüche**

1. Eine integrierte arithmetische Verarbeitungseinheit zusammen mit einer Mikroprozessor-Zentraleinheit (2), einem Sequencer (6) und einem Schreib-Lese-Arbeitsspeicher (4) zur Durchführung einer Operation nach der entsprechenden Formel :

$$B = a.X + T$$

wobei $\underline{B}$, $\underline{X}$ und $\underline{T}$ Ganzzahlen mit einer hohen Anzahl Bits sind und $\underline{a}$ ein Operand mit einem auf $\underline{m}$ Bits begrenzten Format ist, im Verhältnis zu der hohen Anzahl Bits klein, die Operation über eine Sequenz aufeinanderfolgender Rechenschritte verläuft, die aus der Verbindung des Operanden $\underline{a}$ mit den Operanden $x_i$ und $t_i$ besteht, die in einem Format mit $\underline{n}$ Bits, im Verhältnis zu der besagten hohen Anzahl Bits klein, aufeinanderfolgenden Teilen mit $\underline{n}$ jeweils aneinanderliegenden Bits der Ganzzahlen $\underline{X}$ und $\underline{T}$ entsprechen, diese Teile sind jeweils einem ansteigenden Stellenwert $\underline{i}$ entnommen, und aus der Speicherung eines Teilergebnisses eines Vorgangs $b_i$ selben Stellenwerts $\underline{i}$, einen Teil mit $\underline{n}$ Bits der Gesamtheit der aufeinanderfolgenden Teile mit n aneinanderliegenden Bits des

# EP 0 435 399 B1

Endergebnisses $\underline{B}$ der besagten Operation bildend, die Verarbeitungseinheit verfügt über Eingänge (11, 21, 22) für die Operanden a, $x_i$ und $t_i$ und einen Ausgang (23) für das Teilergebnis $b_i$, einen Multiplikator (30) für die Berechnung des Produkts $a.x_i$, gefolgt von einer Serienschaltung eines ersten (31) und eines zweiten (32) Addierers, der zweite Addierer liefert an seinem Ausgang (37, 38) ein Egebnis der Operation, einerseits aufgliederbar in einen Teil hoher Stellenwerte und einen Teil geringer Stellenwerte mit $\underline{n}$ Bits, die an den Ausgang (23) als Teilergebnis der Operation $b_i$ geleitet werden können, der Operand $t_i$ wird an einen der Eingänge (35) eines (32) der Addierer geleitet, während an einen der Eingänge (34) des anderen Addierers (31) der unter Zuhilfenahme der ersten Rückführspeichermittel (41) der Teil hoher Stellenwerte des besagten Additionsergebnisses aus einem vorhergehenden Rechenschritt geleitet wird,

mit dem Merkmal, daß diese Einheit (1) folgendes enthält :

- $\underline{k}$ parallele Eingänge (11, 12, 13) für den Eingang von $\underline{k}$ Teiloperanden a[1...k] aufeinanderfolgenden Stellenwerts, gegenseitig ausschließend, des Operands $\underline{a}$.,
- Eingang-Auswahlmittel (33), die in einem Zyklus von $\underline{k}$ Schritten arbeiten, die darin bestehen, aufeinanderfolgend an einen der Eingänge des Multiplizierers (30) die beesagten Operandenteile a[1...k] zuzuführen, während die Operanden $x_i$ und $t_i$ über diesen Zyklus gleich gehalten werden,
- zweite Rückführspeichermittel (44, 45) zur Verzögerung um (k-1) Rechenschritte den Teil geringen Stellenwerts des besagten Additionsergebnisses, das während den gesamten unterschiedlichen Rechenschritte eines ersten Zyklus erhalten wurden, und
- mit der Rückführung verbundene Umschaltmittel (43), die die Verbindung der besagten ersten Rückfihrmittel (41) mit den besagten zweiten Rückführspeichermittel ermöglichen, um den Teil hohen Stellenwerts der besagten Additionsergebnisses, der beim ersten Schritt des Zyklus erhalten wurde, um $\underline{k}$ Schritte zu verzögern, wobei der Operand $t_i$ der Addition zugeführt und das Teilergebnis der Operation $b_i$ über den einzigen Schritt eines Zyklus zum Ausgang (23) geleitet wird.

2. Verarbeitungseinheit (1) laut Anspruch 1, mit dem Merkmal, daß die Anzahl an $\underline{k}$ Eingängen für die Operandenteile a[] gleich 3 ist.

3. Verarbeitungseinheit (100) laut Anspruch 1, mit dem Merkmal, daß die Anzahl an $\underline{k}$ Eingängen für die Operandenteile a[] gleich 4 ist.

4. Verarbeitungseinheit (100, 110, 130) laut Anspruch 1, mit dem Merkmal, daß die Eingangsauswahlmittel (33) von der Zentraleinheit gesteuert werden können, um über die Dauer einer Operationssequenz eine verminderte Anzahl $\underline{p}$ an Operandenteilen a[1...p] an den Eingang des Multiplizierers (30), (60) zuzuführen, nach einem Zyklus mit $\underline{p}$ Schritten, wobei die Anzahl $\underline{p}$ kleiner als $\underline{k}$ und mindestens gleich 3 ist, und, daß sie über Verzögerungsauswahlmittel (446) verfügt, die die Anzahl Schritte im Rahmen der zweiten Rückführspeichermittel (44, 445, 45) um (k-p) vermindern können, wenn die verminderte Anzahl $\underline{p}$ Operandenteile verwendet wird.

5. Verarbeitungseinheit (1) laut Anspruch 1, in der besagte ersten Rückführspeichermittel von einem ersten Zwischenregister (41) gebildet werden, das am Eingang den Teil hoher Stellenwerte des Additionsergebnisses vom Ausgang (38) des zweiten Addierers (32) erhält, mit dem Merkmal, daß die besagten zweiten Rückführspeichermittel einen Stapel von (k-1) Zwischenregistern (44, 45) enthalten, in denen die gespeicherten Datenwerte schrittweise transferiert werden, daß die besagten mit der Schaltung der Rückführung verbundenen Mittel einen ersten (42) und einen zweiten (43) Multiplexer enthalten, und, daß das erste Zwischenregister (41) am Ausgang einerseits mit einem ersten Eingang des ersten Multiplexers (42) verbunden ist, der einen zweiten, mit dem Eingang (22) des Operanden $t_i$ verbundenen Eingang hat und einen mit dem Eingang (35) eines (32) der Addierer verbundenen Ausgang, und der Ausgang des ersten Zwischenregisters andererseits mit einem ersten Eingang des zweiten Multiplexers (43) verbunden ist, der einen zweiten mit dem Ausgang (37) geringen Stellenwerts des zweiten Addierers (32) verbundenen Eingang und einen mit einem Eingang des anderen Addierers (31) verbundenen Ausgang hat, über den besagten Stapel von (k-1) Zwischenspeichern (44, 45).

6. Verarbeitungseinheit (100) laut Anspruch 4, in der besagte ersten Rückführspeichermittel von einem ersten Zwischenregister (41) gebildet werden, das am Eingang den Teil hoher Stellenwerte des Additionsergebnisses vom Ausgang (38) des zweiten Addierers (32) erhält, mit dem Merkmal, daß die besagten zweiten Rückführspeichermittel einen Stapel von (k-1) Zwischenregistern (44, 445, 45) enthalten, in denen die gespeicherten Datenwerte schrittweise transferiert werden, daß die besagten Verzögerungsauswahlmittel einen sogenannten "Kurzschluß"-Multiplexer (446) enthalten, der über den Datentransfer des besagten Stapels Register (k-p) Register (445) übergehen kann, und, daß die besagten mit der Schaltung der Rückführung verbundenen Mittel einen ersten (42) und einen zweiten (43) Multiplexer enthalten, und, daß das erste Zwischenregister (41) am Ausgang einerseits mit einem ersten Eingang des ersten Multiplexers (42) verbunden ist, der einen zweiten, mit dem Eingang (22) des Operanden $t_i$ verbundenen Eingang hat und einen mit dem Eingang (35) eines (32) der Addierer verbundenen Ausgang hat, und der Ausgang des ersten Zwischenregisters (41) andererseits mit einem ersten Eingang des zweiten Multiplexers (43) verbunden ist, der einen zweiten mit dem Ausgang (31) geringen Stellenwerts des zweiten Addierers (32) verbundenen Eingang und einen mit einem Eingang des anderen Addierers verbundenen Ausgang hat, über den besagten Stapel von (k-1) Zwischenspeichern (44, 445, 45).

7. Verarbeitungseinheit (110) laut Anspruch 6, mit dem Merkmal, daß sie hinsichtlich der simultanen Verarbeitung eines eventuellen Überlaufbits hohen Stellenwerts des Operandenteils a[k] über einen zusätzlichen Eingang (24) für das besagte Überlaufbit verfügt, das an einen zusätzlichen Eingang des für die Verarbeitung von (n+1).(n) Bits angeordneten Multiplexers (60) verbunden ist, daß der erste Addierer (61) zur Verarbeitung von (2n+1)+(n+1) Bits angeordnet und der zweite Addierer (62) zur Verarbeitung von (2n+1)+n Bits angeordnet ist, daß das zweite Zwischenregister (71) sowie die Zwischenregister (74, 745, 75) des Stapels Register das Format (n+1) Bits haben, daß der zweite Multiplexer (73) an seinem ersten Eingang den Inhalt des ersten Zwischenregisters (71) im Format (n+1) Bits und an seinem zweiten Eingang einerseits den Ausgang geringen Stellenwerts mit $\underline{n}$ Bits des zweiten Addierers (62) und andererseits ein (n+1)tes Bit hohen Stellenwerts eines zusätzlichen, auf Null gebrachten Eingangs (76) des besagten Multiplexers (76) erhält, während der erste Multiplexer (42) seine zwei Eingängen und seinen Ausgang im Format $\underline{n}$ Bits hat, wobei das (n+1)te Ausgangsbit des ersten Zwischenregisters (71) ignoriert wird, und, daß der Ausgang (23) des Teilergebnisses der Operation $b_i$ ebenfalls $\underline{n}$ Bits hat.

8. Eine Verarbeitungseinheit (120) laut Anspruch 5, mit dem Merkmal, daß sie für die simultane Verarbeitung eines eventuellen Überlaufbits hohen Stellenwerts des Operandenteils a[k] einen dritten Addierer (84) mit drei Eingängen enthält, von denen der erste Eingang mit $\underline{n}$ Bits den Teil hohen Stellenwerts des besagten Additionsergebnisses vom Ausgang (38) des zweiten Addierers (32) erhält, dessen zweiter Eingang mit $\underline{n}$ Bits entweder den Wert des Operands $x_i$ oder den Wert von n Bits mit Null erhält, nach der Wahl eines dritten Multiplexers (82), der dritte Addierer (84) enthält einen ersten Ausgang (83) mit $\underline{n}$ Bits, verbunden mit dem Eingang des besagten ersten Zwischenregister (41), und enthält einen zweiten Ausgang mit 1 Bit, dem sogenannten Übertragausgang, dessen Wert in einem Übertragregister (85) mit 1 Bit hinsichtlich seiner Rückführung mit $\underline{k}$ Schritten Verzögerung an den dritten Eingang (87) des selben dritten Addierers (84) über einen vierten Multiplexer (86) der "Null-Rückstellung" gespeichert wird, und, daß der besagte dritte Multiplexer (82) angeordnet ist, um über seinen Ausgang den Operand $x_i$ zu übertragen, wenn zugleich mit dem Operandenteil a[k] ein Überlaufbit zu berücksichtigen und angeordnet ist, um in allen anderen Fällen den Wert Null zu übertragen.

9. Eine Verarbeitungseinheit laut einem der Ansprüche 5 bis 8, mit dem Merkmal, daß unter dem Befehl des Sequencers der erste Multiplexer (42) angeordnet wird, um über seinen Ausgang den Eingang des Operands $t_i$ zu übertragen und der zweite Multiplexer (43) angeordnet wird, über seinen Ausgang den am Ausgang des ersten Zwischenspeichers (41), (71) auftretenden Datenwert zu übertragen, und dies bei jedem ersten Schritt eines Operationszyklus, während die ersten und zweiten Multiplexer bei den anderen Schritten eines Zyklus umgekehrt zu den vorgenannten Positionen angeordnet werden.

10. Eine Verarbeitungseinheit laut einem Beliebigen der Ansprüche 1 bis 9, mit dem Merkmal, daß der Wert von n des besagten Formats 8 Bits beträgt.

11. Eine Verarbeitungseinheit laut einem der Ansprüche 1 bis 10, mit dem Merkmal, daß sie zudem eine am Ausgang (23) des Teilergebnisses der Operande $b_i$ eingefügte "ausschließliche ODER"-Schaltung (50) enthält, um das Ergebnis $b_i$ in $b_i\theta x$ zu wandeln, wobei $\underline{x}$ entweder eine Konstante mit $\underline{n}$ Bits ist, geladen in einem mit dem besagten ausschließlichen ODER verbundenen Register (52), oder die Operande $x_i$, je nach Position eines zusätzlichen Multiplexers (51), dessen Ausgang dem Eingang der ausschließlichen ODER-Schaltung zusammen mit dem Ergebniswert $b_i$ zugeführt wird.

**Claims**

1. An arithmetic processing unit associated with a microprocessor central unit (2), with a sequencer (6) and with a working memory (4) of the read-write type, for performing an operation corresponding to the general formula :

$$B=a.X+T$$

in which B, X and T are integers having a large number of bits and a is an operand having a format restricted to m bits which is small compared with the large number of bits, this operation being produced during a sequence of successive computing steps which consist of combining the operand a with operands $x_i$ and $t_i$ which, in a format of n bits which is small compared with the large number of bits, correspond to successive portions of n contiguous bits of the respective integers X and T, each at the rank of significance i taken in increasing order, and consists of storing a partial result $b_i$, of the same significance rank i and also forming a portion of n bits among all the successive portions of n contiguous bits of the complete result B of said operation, the processing unit having inputs (11, 12, 22) for the operands a, $x_i$ and $t_i$ and an output (23) for the partial result $b_i$, a multiplier (30) for producing the product a.$x_i$, followed by a series combination of a first adder (31) and a second adder (32), the second adder supplying on its output (37, 38) a result of the addition which can be divided into a most significant portion and a least significant portion of n bits which can be sent to the output (23) as an addition result $b_i$, the operand $t_i$ being applied to one of the inputs (35) of one (32) of the adders and the most significant portion of the result of the addition of a preceding computing step being applied to one of the inputs (34) of the other adder (31) by means of a first recycling storage unit (41), characterized in that the unit 1 comprises :

- k parallel inputs (11, 12, 13) for k operands a[1...k] of successive, mutually excluding ranks of the operand a,
- input selection means (33) operating in cycles of k steps, consisting of applying in succession said operands a[1...k] to one of the inputs of the multiplier (30), while the operands $x_i$ and $t_i$ are maintained unchanged during this cycle,
- a second recycling storage unit (44, 45) for delaying by (k-1) computing steps the low significance portion of said result of the addition obtained during all the different computing steps of a first cycle step,
- and switching means (43) associated to the recycling, permitting of the coupling of said first recycling means (41) to said second recycling storage means in order to delay by k computing steps the most significant portion of said result of the addition obtained during the first cycle step, the operand $t_i$ being present at the addition and the partial result $b_i$ of the operation being sent to the output (23) during the first step of a cycle.

2.  A processing unit (1) as claimed in Claim 1, characterized in that the number k of inputs for the operands a[] is equal to 3.

3.  A processing unit (100) as claimed in Claim 1, characterized in that the number k of inputs for the operands a[] is equal to 4.

4.  A processing unit (100, 110, 130) as claimed in Claim 1, characterized in that the input selection means (33) may be controlled by the central unit for applying for the duration of an operation sequence a reduced number p of operands a[1...p] to the input of the multiplier (30), (60), in a cycle of p steps where the number p is lower than k and at least equal to 3, and in that the central unit comprises delay selection means (446) capable of reducing by (k-p) the number of delay steps in the second recycling storage unit (44, 445, 45) when the lower number p of operands is used.

5.  A processing unit (1) as claimed in Claim 1, in which said first recycling storage unit is formed by a first buffer register (41) receiving on the input the most significant portion of the result at the output (38) of the second adder (32), characterized in that said additional recycling storage unit comprises a stack of (k-1) buffer registers (44, 45) in which the stored data are transferred step by step, in that said switching means associated with the recycling comprise a first multiplexer (42) and a second multiplexer (43), and in that the first buffer register (41) is connected on the output, on the one hand, to a first input of the first multiplexer (42) which has a second input connected to the input (22) for operand $t_i$, and an output connected to an input (35) of one (32) of the adders, and, on the other hand, the output of which first buffer register is connected to a first input of the second multiplexer (43) which has a second input connected to the least significant output (37) of the second adder (32) and an output connected to an input of the other adder (31), via said stack of (k-1) buffer registers (44, 45).

6.  A processing unit (100) as claimed in Claim 4, in which said recycling storage unit is formed by a first buffer register (41) receiving on the input the most significant portion of said result on the output (38) of the second adder (32), characterized in that said additional recycling storage unit comprises a stack of (k-1) buffer registers (44, 445, 45) in which the stored data are transferred step by step, in that said delay selection means comprise a multiplexer (446) called 'short-circuit' capable of avoiding (k-p) register(s) (445) during the data transfer in said register stack, in that said switching means associated to the recycling comprises a first (42) and a second unit (43), and in that said first buffer register (41) is connected on its output, on the one hand, to a first input of the first multiplexer (42) which has a second input connected to the input (22) for operand $t_i$, and an output connected to an input (35) of one (32) of the adders, and, on the other hand, to a first input of the second multiplexer (43) which has a second input connected to the least significant output of the second adder (32) and an output connected to an input of the other adder (31), via said stack of (k-1) buffer registers. (44, 445, 45).

7. A processing unit (110) as claimed in Claim 6, characterized in that, for the purpose of the simultaneous processing of a possible most significant overflow bit of the operand a[k], the unit comprises an additional input (24) for said overflow bit, connected to an additional input of the multiplier (60) arranged for processing (n+1) x (n) bits, in that the first adder (61) is arranged for processing (2n+1) + (n+1) bits, and the second adder (62), in order to process (2n+1) + n bits, in that the first buffer register (71) and the buffer registers (74, 745, 75) of the stack of registers are in the format of (n+1) bits, in that the second multiplexer (73) receives on its first input the contents of the first buffer register (71) in the format of (n+1) bits and on its second input, on the one hand the n-bit least significant output of the second adder (62), and on the other hand an $(n+1)^{th}$ most significant bit, from an additional input (76) of said multiplexer (76), forced to zero, while the first multiplexer (42) has its two inputs and its output in the n-bit format, the $(n+1)^{th}$ output bit of the first buffer register (71) being ignored) and the output (23) of the result $b_i$ is also in n bits.

8. A processing unit (120) as claimed in Claim 5, characterized in that, for the purpose of the simultaneous processing of a possible most significant overflow bit of the operand a[k], the unit comprises a third adder (84) having three inputs, of which the first n-bit input receives the most significant portion of said result of the addition at the output (38) of the second adder (32), of which the second n-bit input receives either the value of the operand $x_i$, or an n-zero bit value, a third multiplexer (82) as required, which third adder (84) has a first n-bit output (83) connected to the input of said first buffer register (41) and has a second 1-bit output called carry output, whose value is stored in a 1-bit carry register (85) for the purpose of a carry recycling, in k steps, to the third input (87) of the same third adder (84) via a fourth zero reset multiplexer (86), and in that said third multiplexer (82) is set to transmit on its output the operand $x_i$ when an overflow bit is to be taken into account at the same time as the operand a[k], and set to transmit the zero value in all other cases.

9. Processing unit as claimed in one of the Claims 5 to 8, characterized in that, under the control of the sequencer, the first multiplexer (42) is set to transmit on its output the operand input $t_i$, and the second multiplexer (43) is set to transmit on its output the datum presented at the output of the first buffer register (41),(71), and does this at each first step of a cycle of operations, while the first and second multiplexers are set to the inverse of the previously mentioned settings, during the other steps of a cycle.

10. Processing unit as claimed in any one of the Claims I to 9, characterized in that the value n of said restricted format is 8 bits.

11. Processing unit as claimed in one of the Claims 1 to 10, characterized in that it furthermore comprises an "exclusive-OR" circuit (50) interposed to the output (23) for the partial result $b_i$, in order to transform this result $b_i$ into $b_i \oplus x$, where x is either an n-bit constant loaded into a register (52) associated to said exclusive-OR circuit or the operand $x_i$, depending on the setting of an additional multiplexer (51) whose output signal is applied to the input of the exclusive-OR circuit in conjunction with the partial result $b_i$.

FIG.1

FIG.2

FIG.3

FIG.4

FIG.5